# EUROPÄISCHE PATENTSCHRIFT

(11) **EP 0 499 121 B1**
(45) Veröffentlichungstag und Bekanntmachung des Hinweises auf die Patenterteilung: **18.01.1995**
(21) Anmeldenummer: 92101779.4
(22) Anmeldetag: 04.02.1992
(51) Int. Cl.: F16K 31/60, G05G 1/12

(54) **Betätigungsglied mit Uberlastsicherung**
Operating member with overload protection
Partie de commande avec dispositif de sécurité contre les surcharges

(30) Priorität: 15.02.1991 DE 4104656
(43) Veröffentlichungstag der Anmeldung: 19.08.1992
(73) Patentinhaber: FRIEDRICH GROHE AKTIENGESELLSCHAFT, D-58675 Hemer (DE)
(72) Erfinder: Körfgen, Harald, W-5758 Fröndenberg (DE)

(56) Entgegenhaltungen:
- CH-A- 297 533
- CH-A- 569 219
- DE-A- 850 834
- DE-A- 2 322 153

## Beschreibung

Die Erfindung betrifft eine Vorrichtung zum Verbinden eines Betätigungsglieds, insbesondere eines Betätigungshebels mit einer Spindel eines Ventils, mit einer Überlastsicherung, wobei der Verbindungskopf mittels wenigstens einer federnd nachgebenden Hülse über Erhebungen und Kerben mit dem Betätigungsglied verbunden ist.
Eine derartige Vorrichtung ist aus der deutschen Auslegeschrift 2 322 153 bekannt. Bei dieser Vorrichtung sind jedoch mehrere Hülsen vorgesehen, wobei eine Hülse mittels Schraubenfeder axial gegen eine Schulter in der Bohrung eines Armhebels gestrammt wird, wobei die Stirnseite der Hülse Kerben aufweist, in die entsprechende Erhebungen an der ringförmigen Schulter eingreifen. Ab einem bestimmten Drehmoment bzw. bei einer Überlastung wird die Hülse axial entgegen der Kraft der Schraubenfeder verschoben und die Erhebungen des Armhebels gleiten aus den Kerben heraus, so daß eine unzulässige Drehmomentübertragung ausgeschlossen wird.

Der Erfindung liegt die Aufgabe zugrunde, die im Oberbegriff des Anspruchs 1 angegebene Überlastsicherung zu vereinfachen, so daß die Herstellungskosten verringert werden können.
Diese Aufgabe wird erfindungsgemäß dadurch gelöst, daß die Hülse einen etwa zylindrischen Außenmantel mit einer Riefenverzahnung aufweist, die mit einer entsprechenden Riefenverzahnung in der Bohrung des Betätigungshebels in Eingriff steht, wobei der Außenmantel der Hülse durch Schlitze parallel zur Riefenverzahnung unterteilt und radial mit Abstand zum Verbindungskopf ausgebildet ist, so daß die von den Schlitzen gebildeten Zahnsegmente radial federnd aus dem Eingriff mit der Riefenverzahnung der Bohrung von einem bestimmten Drehmoment an herausdrückbar sind.
Weitere Ausgestaltungen der Erfindung sind in den Ansprüchen 2 bis 7 angegeben.
Mit dieser erfindungsgemäßen Ausbildung kann die Überlastsicherung erheblich vereinfacht werden, wobei die bisher erforderlichen Einzelteile auf ein Element reduziert werden können. Darüber hinaus kann das erfindungsgemäße Hülsenelement neben der Funktion als Überlastsicherung noch eine Isolierung zwischen Ventilspindel und Betätigungshebel bewerkstelligen, wenn das Hülsenelement aus wärmeisolierendem Kunststoff, vorzugsweise im kostengünstigen Spritzgußverfahren, hergestellt wird.

Ausführungsbeispiele der Erfindung sind in der Zeichnung dargestellt und werden im folgenden näher beschrieben. Es zeigt
- Figur 1: ein Wasserzulaufventil in einer zum Teil dargestellten Wassermischbatterie im Schnitt;
- Figur 2: die in Figur 1 dargestellte Hülse in der Schnittebene II der Figur 3 in größerem Maßstab;
- Figur 3: einen Teil der in Figur 2 dargestellten Hülse in Draufsicht;
- Figur 4: ein anderes Ausführungsbeispiel eines Griffhebels teilweise geschnitten;
- Figur 5: ein anderes Ausführungsbeispiel der Hülse in der Schnittebene V der Figur 6;
- Figur 6: einen Teil der Hülse gemäß Figur 5 in Draufsicht.

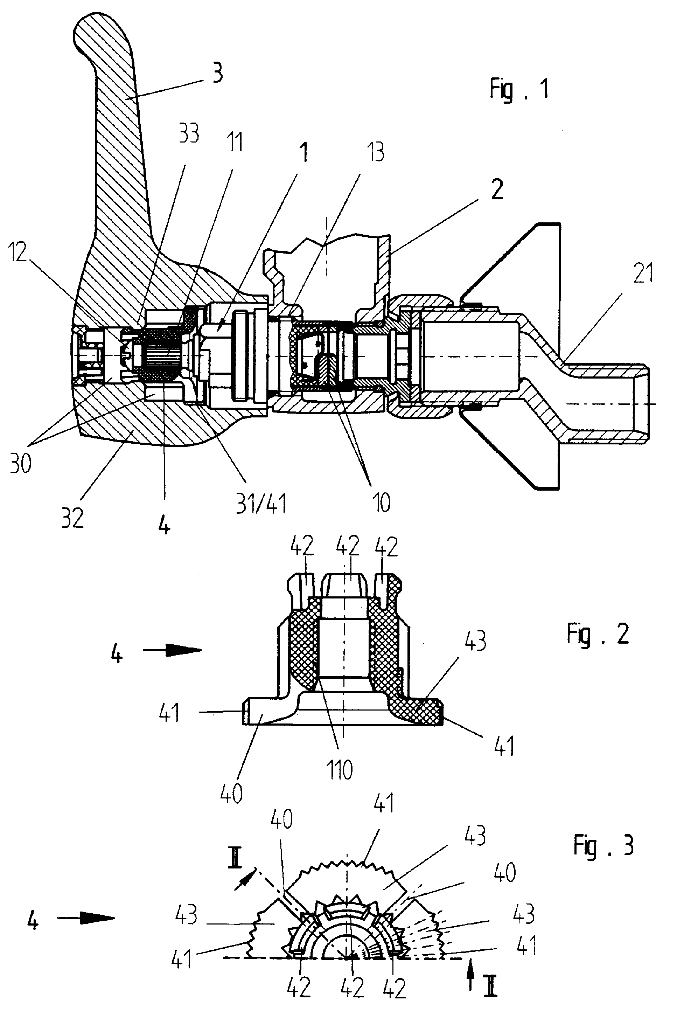

Der Einfachheit halber sind bei den Ausführungsbeispielen in der Zeichnung gleiche oder entsprechende Elemente mit jeweils gleichen Bezugszeichen versehen.
Bei dem Ausführungsbeispiel gemäß Figur 1 ist ein Ventil 1 mit zueinander verdrehbaren Keramikventilscheiben 10 in einem zum Teil dargestellten Batteriekörper 2 einer sanitären Wassermischbatterie mit Hilfe eines Gewindes 13 dicht eingeschraubt. Auf der gegenüberliegenden Seite des Batteriekörpers 2 ist die Anschlußleitung 21 der Warmwasserversorgung eingeschraubt und mit dem Ventil 1 verbunden. In einem anderen Bereich (in der Zeichnung nicht dargestellt) des Batteriekörpers 2 ist die gleiche Ventilanordnung nochmals vorgesehen und mit der Kaltwasserversorgung verbunden, so daß durch Betätigung der beiden Ventile 1 gemischtes bzw. temperiertes Wasser oder Kalt- oder Warmwasser in dem Batteriekörper 2 erzeugt und einem Verbraucher zugeführt werden kann.

An dem aus dem Batteriekörper 2 vorstehenden Ende des Ventils 1 ist ein Verbindungskopf 11 an der Ventilspindel ausgebildet, auf dem mittels Riefenverzahnung 110 eine Hülse 4 drehfest angeordnet und axial mit Hilfe einer Schraube 12 gesichert ist.
Die Hülse 4, wie es insbesondere aus den Figuren 2 und 3 zu entnehmen ist, weist an dem einen Stirnbereich an einem Ringflansch 43 eine etwa zylindrische Außenmantelfläche auf, an der eine Riefenverzahnung 41 ausgebildet ist. Der Ringflansch 43 hat dabei vier symmetrisch angeordnete Schlitze 40, die den Ringflansch 43 in vier radial nach innen federnde Segmente unterteilen. Die Riefenverzahnung 41 am Außenmantel ist jeweils nur im mittleren Bogenbereich zwischen den Schlitzen 40 erhaben bzw. radial vorstehend ausgebildet, so daß eine federnde Auslenkung nach innen problemlos erfolgen kann. An der dem Ringflansch 43 gegenüberliegenden Stirnseite sind federnde Schnappzungen 42 ausgebildet, mit denen ein Betätigungshebel 3 in der Stecklage drehbar aber axial fixiert ist.
Der Betätigungshebel 3 weist eine Nabe 32 auf, in der eine Bohrung 30 zur Aufnahme des vorstehenden Bereichs des Ventils 1 ausgebildet ist. Außerdem hat die Bohrung 30 eine entsprechend der Riefenverzahnung 41 ausgebildete Riefenverzahnung 31. Schließlich hat die Bohrung 30 einen Ringbund 33, der mit den Schnappzungen 42 die Axialsicherung des Betätigungshebels 3 auf der Hülse 4 bewirkt.
Die Hülse 4 ist aus wärmeisolierendem Kunststoff im Spritzgußverfahren hergestellt.

Die Überlastsicherung ist äußerst einfach zu montieren. Zunächst wird die Hülse 4 auf den Verbindungskopf 11 aufgesteckt und mit der Schraube 12 gesichert. Nunmehr kann einfach der Betätigungshebel 3 mit der Nabe 32 auf die Hülse 4 axial bis zum Verrasten mit den Schnappzungen 42 aufgeschoben werden. Danach ist die Überlastsicherung betriebsbereit.

Das höchst zulässige Drehmoment des Ventils 1 mit den zueinander verdrehbaren keramischen Ventilscheiben 10 beträgt etwa 400 bis 700 Ncm. Die federnden Segmente am Ringflansch 43 mit der Riefenverzahnung 41 sind daher entsprechend ausgelegt, so daß bei Erreichung des maximalen Drehmoments die vier Segmente des Ringflansches 43 in einen Freiraum zum Verbindungskopf 11 ausgelenkt werden, so daß die Verbindung zum Betätigungshebel 3 durchrutscht.
Das gewünschte maximale Drehmoment kann durch die Form der Verzahnung sowie der Dimensionierung der federnden Segmente des Ringflansches 43 bestimmt werden. Vorteilhaft weist die Riefenverzahnung ein im Querschnitt dreieckiges Zahnprofil auf, wobei die vorstehenden Spitzen einen Winkel von etwa 90° aufweisen.

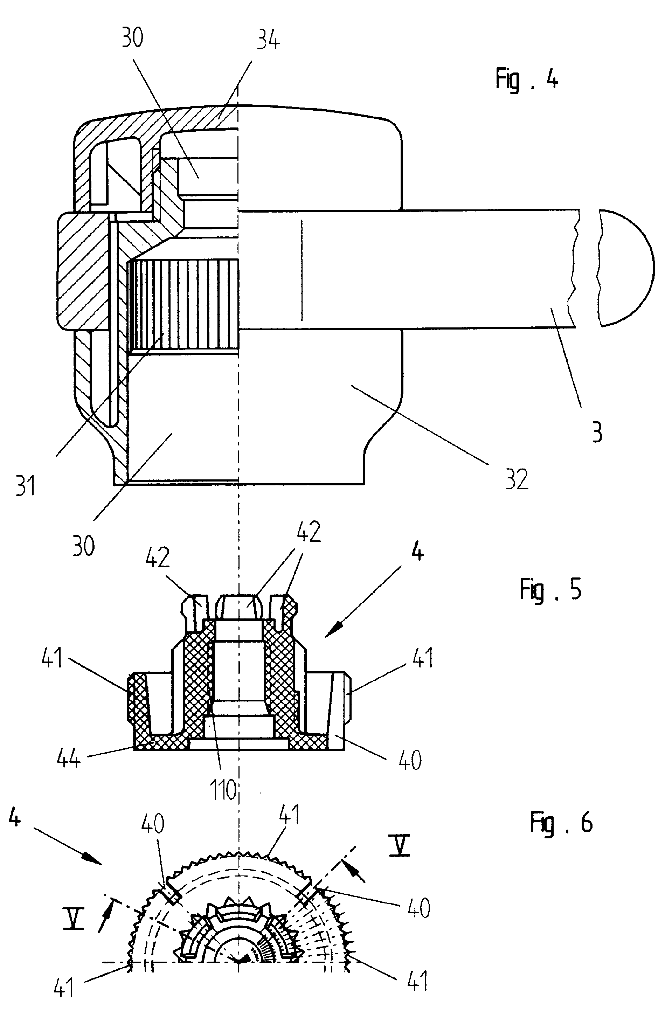

In den Figuren 4, 5 und 6 ist ein abgewandeltes Ausführungsbeispiel dargestellt. Der Betätigungshebel 3 ist an einer separaten Nabe 32 formschlüssig aufgesteckt, wobei der Betätigungshebel 3 in seiner Stecklage von einer Haube 34 gesichert ist, wie es aus Figur 4 der Zeichnung zu entnehmen ist.
Die in den Figuren 5 und 6 gezeigte Ausbildung der Hülse unterscheidet sich zu der vorstehend beschriebenen im wesentlichen durch eine im Querschnitt U-förmige Ausbildung. An dem äußeren umlaufenden U-Schenkel 44 ist dann an seinem Endbereich die Riefenverzahnung 41 vorgesehen. Der U-Schenkel 44 ist dabei von vier symmetrisch angeordneten Schlitzen 40 in federnde Segmente unterteilt. Bei der Ausbildung gemäß Figur 4 bis 6 kann die gesamte Überlastsicherung, Nabe 32 und Hülse 4, günstig aus Kunststoff im Spritzgußverfahren hergestellt werden. Die Funktionsweise entspricht der in dem vorstehend beschriebenen Ausführungsbeispiel.

## Patentansprüche

1. Vorrichtung zum Verbinden eines Betätigungsglieds, insbesondere eines Betätigungshebels (3) mit einer Spindel eines Ventils (1), mit einer Überlastsicherung, wobei der Verbindungskopf (11) mittels wenigstens einer federnd nachgebenden Hülse (4) über Erhebungen und Kerben mit dem Betätigungsglied verbunden ist, dadurch gekennzeichnet, daß die Hülse (4) einen etwa zylindrischen Außenmantel mit einer Riefenverzahnung (41) aufweist, die mit einer entsprechenden Riefenverzahnung (31) in der Bohrung (30) des Betätigungshebels (3) in Eingriff steht, wobei der Außenmantel der Hülse (4) durch Schlitze (40) parallel zur Riefenverzahnung (41) unterteilt und radial mit Abstand zum Verbindungskopf (11) ausgebildet ist, so daß die von den Schlitzen (40) gebildeten Zahnsegmente radial federnd aus dem Eingriff mit der Riefenverzahnung (31) der Bohrung (30) von einem bestimmten Drehmoment an herausdrückbar sind.

2. Vorrichtung nach Anspruch 1, dadurch gekennzeichnet, daß die Hülse (4) aus wärmeisolierendem Kunststoff hergestellt ist und stirnseitig Schnappzungen (42) zur axialen Verrastung mit einer Habe (32) des Betätigungshebels (3) hat.

3. Vorrichtung nach Anspruch 1 oder 2, dadurch gekennzeichnet, daß die Riefenverzahnung (41) an einem Ringflansch (43) ausgebildet ist, wobei der Ringflansch (43) von symmetrisch angeordneten Schlitzen (40) in federnde Segmente unterteilt ist.

4. Vorrichtung nach Anspruch 1 oder 2, dadurch gekennzeichnet, daß die Hülse (4) im Querschnitt etwa U-förmig ausgebildet ist, wobei an dem äußeren umlaufenden U-Schenkel (44) am Endbereich die Riefenverzahnung (41) angeordnet und der äußere U-Schenkel (44) symmetrisch von Schlitzen (40) in federnde Segmente unterteilt ist.

5. Vorrichtung nach einem der Ansprüche 1 bis 4, dadurch gekennzeichnet, daß an der Hülse (4) nur jeweils im mittleren Bogenbereich des Außenmantels zwischen den Schlitzen (40) die Riefenverzahnung (41) erhaben ausgebildet ist.

6. Vorrichtung nach einem der Ansprüche 1 bis 5, dadurch gekennzeichnet, daß die Riefenzähne im Querschnitt etwa dreieckig mit einem Spitzenwinkel von etwa 90° ausgebildet sind.

7. Vorrichtung nach einem der Ansprüche 1 bis 6, dadurch gekennzeichnet, daß die mit einer Verzahnung versehenen Segmente so ausgebildet sind, daß sie bei einem Drehmoment von etwa 400 bis 700 Ncm aus der Verzahnung (31) ausgelenkt werden.

## Claims

1. Device for connecting an actuating member, especially an actuating lever (3), to a spindle of a valve (1), with an overload-preventing means, the connecting head (11) being connected to the actuating member by means of at least one resiliently yielding sleeve (4) by way of projections and notches, characterised in that the sleeve (4) has an approximately cylindrical outer wall with a groove toothing (41) which is engaged with a corresponding groove toothing (31) in the bore (30) of the actuating lever (3), the outer wall of the sleeve (4) being divided by means of slots (40) parallel to the groove toothing (41) and being radially at a distance from the connecting head (11), so that the tooth segments formed by the slots (40) can be pushed out resiliently in a radial direction out of engagement with the groove toothing (31) of the bore (30) as from a predetermined torque.

2. Device according to Claim 1, characterised in that the sleeve (4) is produced from heat-insulating plastics material and has snap-in tongues (42) at its end for axial engagement with a hub (32) of the actuating lever (3).

3. Device according to Claim 1 or 2, characterised in that the groove toothing (41) is formed on an annular flange (43), the annular flange (43) being divided into resilient segments by symmetrically arranged slots (40).

4. Device according to Claim 1 or 2, characterised in that the sleeve (4) is approximately U-shaped in cross-section, the groove toothing (41) being arranged on the outer circumferential limb (44) of the U-shape in the end region, and the outer limb (44) of the U-shape being divided symmetrically into resilient segments by slots (40).

5. Device according to one of Claims 1 to 4, characterised in that on the sleeve (4) the groove toothing (41) is raised only in the central region in each case of the arc of the outer wall between the slots (40).

6. Device according to one of Claims 1 to 5, characterised in that the groove teeth are approximately triangular in cross-section with a vertex angle of approximately 90°.

7. Device according to one of Claims 1 to 6, characterised in that the segments provided with toothing are so constructed that at a torque of approximately 400 to 700 Ncm they are deflected out of the toothing (31).

## Revendications

1. Dispositif pour relier un élément de manoeuvre notamment un levier de manoeuvre (3) à la broche d'une vanne (1), comprenant une sécurité de surcharge, la tête de liaison (11) étant reliée par au moins un manchon (4) élastique, par l'intermédiaire de bossages et d'encoches à cet élément de manoeuvre, dispositif caractérisé en ce que le manchon (4) présente une enveloppe extérieure sensiblement cylindrique et une denture moletée (41) en prise avec une denture moletée (31) correspondante du perçage (30) du levier de manoeuvre (3), l'enveloppe extérieure du manchon (4) étant subdivisée par les fentes (40) parallèles à la denture moletée (41) et radialement à distance de la tête de liaison (11), de façon que les segments de dents formés par les fentes (40) puissent se dégager radialement de manière élastique de la prise avec la denture moletée (31) du perçage (30) à partir d'un couple déterminé.

2. Dispositif selon la revendication 1, caractérisé en ce que la douille (4) est en matière plastique à isolation thermique et comporte sur sa face frontale des languettes d'encliquetage (42) pour l'accrochage axial avec un moyeu (32) du levier de manoeuvre (3).

3. Dispositif selon la revendication 1 ou 2, caractérisé en ce que la denture moletée (41) est réalisée sur une bride annulaire (43), la bride annulaire (43) étant subdivisée en des segments élastiques par des fentes (40) réparties symétriquement.

4. Dispositif selon la revendication 1 ou 2, caractérisé en ce que le manchon (4) a une section sensiblement en forme de U et la branche en U (44), extérieure, périphérique, est prévue dans la zone d'extrémité de la denture moletée (41) et la branche en U extérieure (44) est subdivisée en segments élastiques, symétriquement par les fentes (40).

5. Dispositif selon l'une des revendications 1 à 4, caractérisé en ce que la denture moletée (41), n'est pas en saillie sur le manchon (4) seulement dans la zone d'arc médiane de l'enveloppe extérieure, entre les fentes (40).

6. Dispositif selon l'une des revendications 1 à 5, caractérisé en ce que les dents moletées ont une section sensiblement triangulaire avec un angle aigu de l'ordre de 90°.

7. Dispositif selon l'une des revendications 1 à 6, caractérisé en ce que les segments munis d'une denture sont réalisés pour pouvoir se décrocher de la denture (31) pour un couple de l'ordre de 400 à 700 Ncm.
